# EUROPEAN PATENT APPLICATION

(11) **EP 4 339 909 A1**
(43) Date of publication of application: **20.03.2024**
(21) Application number: 23194257.4
(22) Date of filing: 30.08.2023
(51) Int. Cl.: G07C 9/00, G07C 9/10

(54) **CAMERA WITH IN-BUILT ACCESS CONTROL**

(30) Priority: 13.09.2022 US 202217944140
(71) Applicant: Honeywell International Inc., Charlotte, NC 28202 (US)
(72) Inventor: HUBERT, Benitta, Charlotte, 28202 (US); PRADEEP, Eben Gnana, Charlotte, 28202 (US); ESWARA, Lalitha M., Charlotte, 28202 (US); BHATHEY, Balaji Sivakumar, Charlotte, 28202 (US); SHETTY, Sharatkumar, Charlotte, 28202 (US)
(74) Representative: Haseltine Lake Kempner LLP

(57) **Abstract**

An access control system includes a lock that releasably locks an access gate and is configured to be releasably unlocked upon receiving an unlock signal. An access control device is deployable proximate the access gate and includes a housing that houses a camera configured to capture one or more images of persons in front of the access gate, a wireless transceiver, and a controller that is operably coupled with the camera and the wireless transceiver. The controller is configured to receive an access code from a mobile device carried by a person in front of the access gate and to identify whether the person with that access code is authorized to enter through the access gate. When confirmed, the controller is configured to provide the unlock signal to the lock to unlock the access gate when confirmed, and to not provide the unlock signal when not confirmed.

## Description

### Technical Field

The present disclosure pertains to access control systems for controlling access to a secure area.

### Background

A variety of access control systems are available for controlling access to a secure area of a building or the like. These systems often use access cards or biometrics to gain access. Such systems often require installation and maintenance of a number of separate components that are configured to work together to perform the desired access control function. Some of these systems can provide functionality such as access, occupancy counting, tailgating detection and detecting people entering or exiting in the wrong direction. Each of these functionalities may require distinct solutions from a plurality of vendors, which can drive up the cost and complexity of the system. What would be desirable is an access control system that is simpler to install, maintain and use.

### Summary

This disclosure relates to access control systems for controlling access to a secure area via an access gate. An example may be found in an access control system that includes a lock that releasably locks the access gate and is configured to be releasably unlocked upon receiving an unlock signal. An access control device is deployable proximate the access gate and includes a housing that houses a camera that is configured to capture one or more images of persons in front of the access gate, a wireless transceiver, and a controller that is operably coupled with the camera and the wireless transceiver. The controller is configured to receive via the wireless transceiver an access code from a mobile device carried by a person in front of the access gate. In some cases, the controller is configured to confirm whether the person with that access code is authorized to enter through the access gate. When confirmed, the controller is configured to provide the unlock signal to the lock to unlock the access gate. When not confirmed, the controller is configured to not provide the unlock signal to the lock.

In some cases, it is the mobile device, not the controller, that confirms whether the person carrying the mobile device is authorized to enter through the access gate. When the mobile device confirms that the person carrying the mobile device is authorized to enter through the access gate, the mobile device sends an access code (e.g. an authorization code) that authorizes the controller to provide the unlock signal to the lock to unlock the access gate. When the mobile device does not confirm that the person carrying the mobile device is authorized to enter through the access gate, the mobile device does not send the access code (e.g. authorization code).

Another example may be found in an access control device that is configured to be deployed proximate an access gate having a lock. The illustrative access control device includes a housing that houses a camera configured to capture one or more images of persons in front of the access gate, a Bluetooth transceiver, and a controller that is operably coupled with the camera and the Bluetooth transceiver. The controller is configured to receive via the Bluetooth transceiver an access code from a mobile device carried by a person in front of the access gate. The controller is configured to provide an unlock signal to the lock when the person with that access code is authorized to enter through the access gate and to not provide the unlock signal to the lock when the person with that access code is not authorized to enter through the access gate. In some cases, the controller determines whether the person is authorized to enter through the access gate, sometimes with access to an access control user database hosted by a remote server or the like. In other cases, the mobile device determines whether the person is authorized to enter through the access gate, sometimes with access to an access control user database hosted by a remote server or the like. In some cases, the controller and the mobile device work together to determine whether the person is authorized to enter through the access gate, sometimes with access to an access control user database hosted by a remote server or the like. In any event, the controller is configured to receive one or more images of persons in front of the access gate, determine from the one or more images whether a person other than the person with the access code is attempting to gain entry through the access gate by tailgating, and send an alarm when it is determined that the person other than the person with the access code is attempting to gain entry through the access gate by tailgating.

Another example may be found in an access control device that is configured to be deployed proximate an access gate having a lock. The illustrative access control device includes a housing that houses a camera configured to capture one or more images of persons in front of the access gate, a Bluetooth transceiver, and a controller that is operably coupled with the camera and the Bluetooth transceiver. The controller is configured to receive via the Bluetooth transceiver an access signal from a mobile device carried by a person in front of the access gate, receive one or more images of persons in front of the access gate, and identify through video analytics performed on one or more of the images whether one or more conditions are met that warrant denial of entry through the access gate. The controller is configured to provide an unlock signal to the lock when none of the one or more conditions that warrant denial of entry through the access gate are present and the person is found to be authorized to enter through the access gate, and to not provide the unlock signal to the lock when one or more conditions that warrant denial of entry through the access gate are present or the person is found to be not authorized to enter through the access gate.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic block diagram showing an illustrative access control system;
Figure 2 is a schematic block diagram showing an illustrative access control system;
Figure 3 is a schematic diagram showing an illustrative access control system;
Figure 4 is a schematic block diagram showing an illustrative access control system; and
Figure 5 is a schematic block diagram showing communication within an illustrative access control system.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

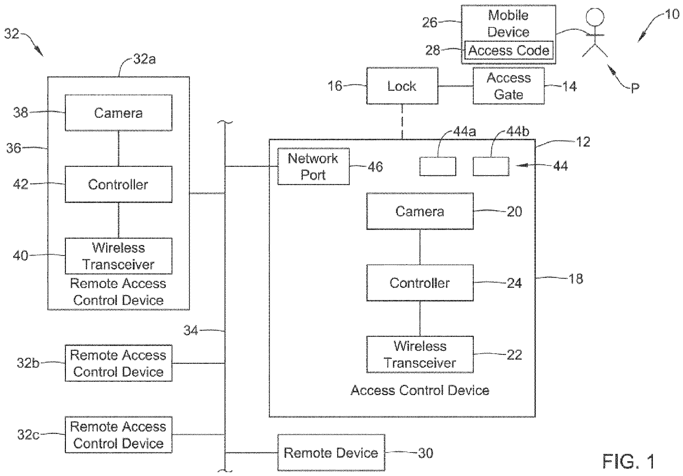

Figure 1 is a schematic block diagram showing an illustrative access control system 10. The illustrative access control system 10 includes an access control device 12 that is deployable proximate an access gate 14. A lock 16 is configured to releasably lock the access gate 14. When the lock 16 is unlocked, the access gate 14 can be opened, and people can pass through the access gate 14 in order to access (or depart) a secure space that is beyond the access gate 14. In some cases, the access control device 12 is configured to determine whether to grant access to the secure space that is beyond the access gate 14, and thus determine whether to provide an unlock signal to the lock 16, or whether to not provide an unlock signal to the lock 16. The access gate 14 may be a door, a turnstile, a virtual gate or any other suitable access control mechanism.

The access control device 12 includes a housing 18 that houses various components of the access control device 12. In the example shown, the housing 18 houses a camera 20 that is configured to capture one or more images of persons that are in front of the access gate 14. The illustrative housing 18 also houses a wireless transceiver 22. In some cases, the wireless transceiver 22 may be a Bluetooth transceiver. In some cases, the wireless transceiver 22 may be a Bluetooth Low Energy (BLE) transceiver. The wireless transceiver 22 may be a WiFi transceiver, for example. These are just examples. The illustrative housing 18 also houses a controller 24 that is operably coupled with the camera 20 and with the wireless transceiver 22. In some cases, the housing 18 may be a camera housing, and the other components such as the wireless transceiver 22 and the controller 24 may be disposed within the camera housing. This is just an example.

Figure 1 shows a person P holding a mobile device 26. The mobile device 26 may be a smartphone, for example. The person P may be holding the mobile device 26 in their hand, or perhaps the person P may have the mobile device in their pocket. In some cases, the mobile device 26 may not be a smartphone, but may be a tablet or the like. In some cases, the mobile device 26 may be a dedicated access control device.

The mobile device 26 may be configured to execute an executable application that is stored on the mobile device 26. In some cases, the mobile device 26 may broadcast or otherwise transmit an access code 28 from the mobile device 26 to the access control device 12. In some cases, the access code 28 may be stored within the executable application, or within a memory of the mobile device 26. In some cases, the access code 28 may be generated by the executable application and uniquely identify the mobile device 26 and thus person P assigned to the mobile device 26 to the controller 24 of the access control device 12. In some cases, the executable application may require that the user of the mobile device 26 successfully sign in, or provide a pin or code, before the executable application will provide the access code 28. This can help guard against someone attempting to gain access with a found, or perhaps stolen, mobile device 26. In some cases, the executable application may close itself, or otherwise preclude transmission of the access code 28, once the person P holding the mobile device 26 has exited the premises. In some cases, the mobile device 26 may verify that person P is the person carrying the mobile device 26 before providing the access code 28. In some cases, the mobile device may verify that person P is the person carrying the mobile device 26 by requiring the user of the mobile device 26 to enter a PIN, provide biometrics and/or provide any other suitable verification information.

The controller 24 may be configured to determine whether the person P with a particular access code is authorized to enter through the access gate 14. When the person P is authorized, the controller 24 is configured to provide an unlock signal to the lock 16, thereby instructing the lock 16 to unlock the access gate 14. When the person P is not authorized, the controller 24 is configured to not provide an unlock signal to the lock 16. This results in the lock 16 remaining locked, and the person P would not have access through the access gate 14.

In some cases, it is the mobile device 26, not the controller 24, that confirms whether the person P carrying the mobile device 26 is authorized to enter through the access gate 14. When the mobile device 26 confirms that the person P carrying the mobile device 26 is authorized to enter through the access gate 14, the mobile device 26 sends an access code (e.g. an authorization code) that authorizes the controller 24 to provide the unlock signal to the lock 16 to unlock the access gate 14. When the mobile device 26 does not confirm that the person P carrying the mobile device 26 is authorized to enter through the access gate 14, the mobile device 26 does not send the access code (e.g. authorization code). In some cases, the controller 24 and the mobile device 26 work together to determine whether the person P is authorized to enter through the access gate 14, sometimes with access to an access control user database hosted by a remote server or the like.

In some instances, the controller 24 may be configured to receive one or more images of persons (such as the person P) in front of the access gate 14 while the access gate 14 is unlocked and to determine from the one or more images whether a person other than the person P with the access code 28 is attempting to gain entry through the access gate 14 by tailgating. Tailgating refers to an event in which a person P who is authorized to pass through the access gate 14 does so, and then one or more other people who are not authorized to pass through the access gate 14 quickly follow the authorized person P through the access gate 14 before the access gate 14 is relocked. When the controller 24 determines that a person other than the person P with the access code 28 is attempting to gain entry through the access gate 14 by tailgating, the controller 24 is configured to send an alert and/or one or more of the images to a remote device 30. In some cases, the controller 24 may implement video analytics for determining whether a person other than the person P with the access code 28 is attempting to gain entry through the access gate 14 by tailgating. In other cases, the controller 24 may send one or more images to a remote device 30, which may perform video analytics to determining whether a person other than the person P with the access code 28 is attempting to gain entry through the access gate 14 by tailgating. The unauthorized person may be detected using video analytics in which the camera 32 counts the number of people detected entering and correlates this with the number of people who should be entering based upon how many people were given access during a time period of several seconds. In some cases, the remote device 30 informs the controller 24 whether a person other than the person P with the access code 28 is attempting to gain entry through the access gate 14 by tailgating.

When it is determined that a person other than the person P with the access code 28 is attempting to gain entry through the access gate 14 by tailgating, the controller 24 may issue an audio and/or visual alarm at the access gate 14 to provide notice of the security violation. The controller 24 may also log the security violation along with one or more images captured by the camera 20 of the person attempting to gain access through tailgating. An alarm may also be displayed on a security system console to notify security personnel. These are just examples.

In some cases, the controller 24 may be configured to receive one or more images of persons in front of the access gate 14 and to determine, based at least in part on the one or more images, whether the person P with the access code 28 is in compliance with a masking mandate (e.g. mask covering the nose and mouth), and if not, not providing the unlock signal to the lock 16. The controller 24 may be configured to determine, based at least in part on the one or more images, whether the person P with the access code 28 is in compliance with a social distancing mandate (e.g. six feet from all other persons), and if not, not providing the unlock signal to the lock 16. The controller 24 may be configured to determine, based at least in part upon the one or more images, whether the person P with the access code 28 is in compliance with an equipment mandate, and if not, not providing the unlock signal to the lock 16. As an example, the equipment mandate may include a mandate to wear one or more of a clean room suit, a hard hat, safety glasses, gloves, ear plugs, a hair net and/or suitable boots/shoes. The controller 24 may be configured to determine, based at least in part upon the one or more images, whether one or more persons in front of the access gate are exhibiting predetermined behavior (e.g. certain body movements and/or body positions, carrying certain types of object, shielding their face from the camera, attempting to hide behind another person, etc.). The controller 24 may be configured to determine, based at least in part upon the one or more images, how many persons have entered into and exited from the secure space through the access gate 14 to determine an current occupancy count of the secure space.

In some cases, the controller 24 may be configured to receive one or more images of persons in front of the access gate 14 and to determine, based at least in part on the one or more images, one or more facial features suitable for facial recognition for one or more persons in front of the access gate 14. The controller 24 may be configured to confirm through facial recognition the identity of the person P with the access code 28, and if confirmed, provide the unlock signal to the lock 16 to unlock the access gate 14, and if not confirmed, not providing the unlock signal to the lock 16. In some cases, the controller 24 may be configured to receive one or more images of persons in front of the access gate 14 and to archive one or more of the images that are captured while the access gate 14 is unlocked.

In some cases, the controller 24 may be configured to overlay an image, or even a video stream, with additional information that would be displayed when the image or video stream is subsequently viewed on a display, for example. The controller 24 may be configured to display a green box around a valid user that includes card holder information. The controller 24 may be configured to display a red box around an invalid user that includes the card holder information that the invalid user attempted to use. In some cases, door status, such as locked or unlocked, may be superimposed onto the image or video stream. As an example, "door closed" may be displayed in a black box, "door open" may be displayed in a green box, "door open too long" may be displayed in a red box, and "door forced open" may also be in a red box. Tailgating attempts may also be displayed in a red box. These colors are merely illustrative.

In some cases, the access control device 12 may be operatively coupled to one or more remote access control devices 32, individually labeled as 32a, 32b and 32c. While a total of three remote access control devices 32 are shown, it will be appreciated that this is merely illustrative, as the access control system 10 may include any number of remote access control devices 32, and in some cases may include a large number of remote access control devices 32 or no remote access control devices 32. There may be a remote access control device 32 installed proximate each of a large number of access gates within a facility, for example. In this, "remote" may simply refer to a particular remote access control device 32 being located in a different space, or proximate a different access gate 14. In some cases, the access control device 12 is operatively coupled to each of the remote access control devices 32 through a peer-to-peer network 34. The peer-to-peer network 34 may be a mesh network, for example.

In some cases, the access control device 12 may identify which persons P may gain access through the access gate 14 by referencing access control user data. The access control user data may be locally stored, but must be updated. In some cases, the access control user data is downloaded and/or updated from a master access control user database stored on a remote server. In some cases, the access control device 12 may not have a direct wired or wireless connection to the remote server. When so provided, the access control device 12 may download and/or update the local access control user data from the local copy of the access control user data stored on one of the remote access control devices 32, and/or from the remote server through the peer-to-peer network 34 formed by the access control device 12, the remote access control devices 32 and the remote server.

Each of the remote access control devices 32 may be considered as being similar to the access control device 12. As shown, the remote access control device 32 includes a housing 36 that houses a camera 38, a wireless transceiver 40 and a controller 42 that is operably coupled with the camera 38 and with the wireless transceiver 40. It will be appreciated that each of the remote access control devices 32, such as the remote access control device 32b and the remote access control device 32c, will include the components described with respect to the remote access control device 32a.

In some cases, the access control device 12 includes two or more wiring terminals 44, individually labeled as 44a and 44b. In some cases, there may be three or more wiring terminals 44. The controller 24 may provide the unlock signal to the lock 16 via a wired connection that includes two or more control wires electrically connected with the wiring terminals 44. In some cases, the wiring terminals 44, or at least some of the two or more wiring terminals 44, may be used for receiving power wires for powering the access control device 12. In some cases, the access control device 12 may include a wired network port 46 for receiving a network cable for communicating with the remote device 30 and/or with one or more of the remote access control devices 32.

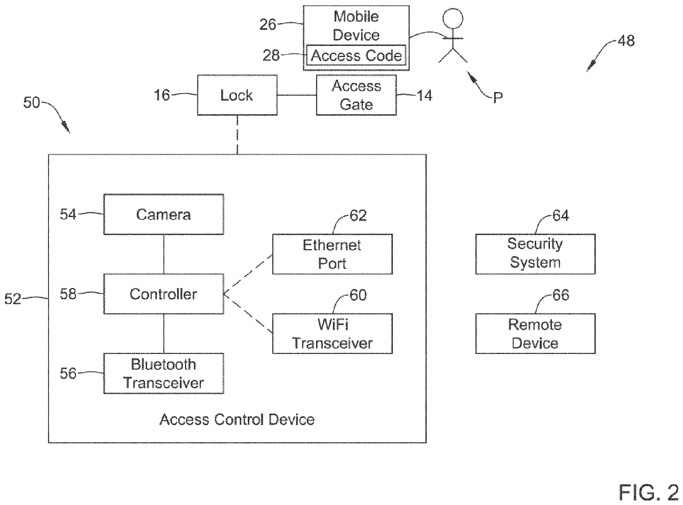

Figure 2 is a schematic block diagram of an illustrative access control system 48. The illustrative access control system 48 includes an access control device 50 that is deployable proximate the access gate 14. The lock 16 is configured to releasably lock the access gate 14. When the lock 16 is unlocked, the access gate 14 can be opened, and people can pass through the access gate 14 in order to access (or depart) a secure space that is beyond the access gate 14. The access control device 50 is configured to identify whether to grant access to the secure space that is beyond the access gate 14, and thus determine whether to provide an unlock signal to the lock 16, or whether to not provide an unlock signal to the lock 16.

The illustrative access control device 50 includes a housing 52 that houses various components of the access control device 50. The illustrative housing 52 houses a camera 54 that is configured to capture one or more images of persons that are in front of the access gate 14. The housing 52 houses a Bluetooth transceiver 56. In some cases, the Bluetooth transceiver 56 may be a Bluetooth Low Energy (BLE) transceiver. The illustrative housing 52 houses a controller 58 that is operably coupled with the camera 54 and with the Bluetooth transceiver 56. In some cases, the housing 52 may be a camera housing, and the other components such as the Bluetooth transceiver 56 and the controller 58 may be disposed within the camera housing. This is just an example.

Figure 2 shows a person P holding the mobile device 26. The mobile device 26 may be a smartphone, for example. The person P may be holding the mobile device 26 in their hand, or perhaps the person P may have the mobile device in their pocket. In some cases, the mobile device 26 may not be a smartphone, but may be a tablet or the like. In some cases, the mobile device 26 may be a dedicated access control device.

The mobile device 26 may be configured to execute an executable application that is stored on the mobile device 26. In some cases, the mobile device 26 may broadcast or otherwise transmit an access code 28 from the mobile device 26 to the access control device 50. In some cases, the access code 28 may be stored within the executable application, or within memory of the mobile device 26. In some cases, the access code 28 may be generated by the executable application and uniquely identify the mobile device 26 and thus person P assigned to the mobile device 26 to the controller 24 of the access control device 12. In some cases, the mobile device 26 may verify that person P is the person carrying the mobile device 26 before providing the access code 28. In some cases, the mobile device may verify that person P is the person carrying the mobile device 26 by requiring the user of the mobile device 26 to enter a PIN, provide biometrics and/or provide any other suitable verification information.

The controller 58 may be configured to determine whether the person P with a particular access code is authorized to enter through the access gate 14. When the person P is authorized, the controller 58 is configured to provide an unlock signal to the lock 16, thereby instructing the lock 16 to unlock the access gate 14. When the person P is not authorized, the controller 58 is configured to not provide an unlock signal to the lock 16. This results in the lock 16 remaining locked, and the person P would not have access through the access gate 14.

In some cases, it is the mobile device 26, not the controller 58, that confirms whether the person P carrying the mobile device 26 is authorized to enter through the access gate 14. When the mobile device 26 confirms that the person P carrying the mobile device 26 is authorized to enter through the access gate 14, the mobile device 26 sends an access code (e.g. an authorization code) that authorizes the controller 58 to provide the unlock signal to the lock 16 to unlock the access gate 14. When the mobile device 26 does not confirm that the person P carrying the mobile device 26 is authorized to enter through the access gate 14, the mobile device 26 does not send the access code (e.g. authorization code). In some cases, the controller 58 and the mobile device 26 work together to determine whether the person P is authorized to enter through the access gate 14, sometimes with access to an access control user database hosted by a remote server or the like.

In some cases, the controller 58 may be configured to receive one or more images of persons in front of the access gate 14 and to determine from the one or more images whether a person other than the person P with the access code 28 is attempting to gain entry through the access gate by tailgating. The controller 58 may be configured to send an alarm when it is determined that the person other than the person P with the access code 28 is attempting to gain entry through the access gate 14 by tailgating.

In some cases, the controller 58 may be configured to determine whether the person with the access code 28 is authorized to enter through the access gate. In some cases, a remote device 66 may determine whether the person P with the access code 28 is authorized to enter through the access gate and communicates that to the access control device 50. The remote device 66 may be a computer or a computer server, or perhaps a cloud-based server. The remote device 66 may be the mobile device 26 or a remote access control device 32.

In some cases, the access control device 50 may include a communication path such as but not limited to the Bluetooth transceiver 56, a WiFi transceiver 60 and/or an ethernet port 62. The controller 58 may send the alarm via the communication path to a security system 64 that may be the security system for the building or facility in which the access control device 50 is deployed. In some cases, the controller 58 may issue an audio and/or visual alarm at the access gate 14 to provide notice of the security violation. The controller 58 may also log the security violation along with one or more images captured by the camera 54 of the person attempting to gain access through tailgating.

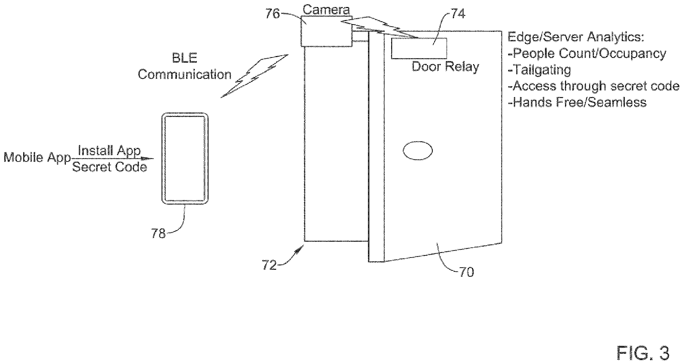

Figure 3 is a schematic diagram showing an illustrative access control system 68 that may be considered as being an example or even an implementation of the access control system 10 and/or the access control system 48. The access control system 68 includes a door 70, which may be considered as being an example of the access gate 14. A secure space 72 is shown behind the door 70. The secure space 72 is accessible when the door 70 is unlocked (and open), and is not accessible when the door 70 is closed and locked. The door 70 includes a door relay 74, which is configured to receive a door unlock signal and in response unlock the door 70. A camera 76 is mounted proximate the door 70 in a position that enables a field of view of the camera 76 to be focused on an area in front of the door 70.

The camera 76 is configured to receive an access code generated by an application executing on a mobile device 78 that may be carried by a person desiring access through the door 70. The camera 76 receives the access code, and identifies whether the person carrying the mobile device 78 is authorized to pass through the door 70. If so, the camera 76 sends an unlock signal to the door relay 74, which receives the unlock signal and in response unlocks the door 70. If the person is not authorized, no unlock signal is sent to the door relay 74.

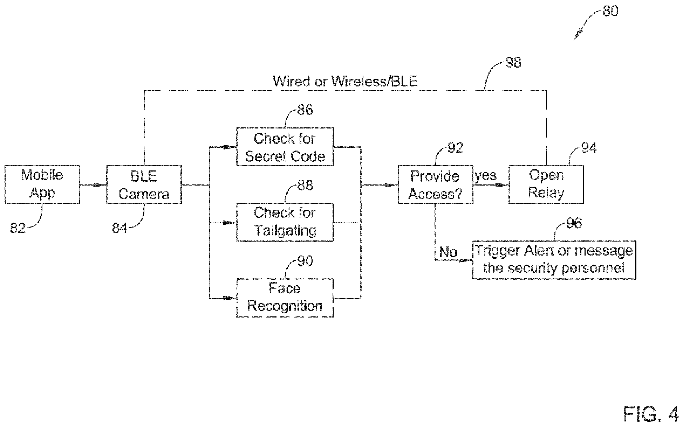

Figure 4 is a schematic block diagram showing an illustrative access control system 80. A mobile app 82 of a mobile device sends an access code to a BLE camera 84. In this example, the BLE camera 84 confirms whether the access code, or the "secret code", is correct and is authorized for access, as indicated at block 86. The BLE camera 84 will check for tailgating, which may entail capturing and analyzing one or more images to determine if tailgating is occurring, as indicated at block 88. In some cases, the BLE camera 84 may also perform facial recognition, as indicated at block 90. In some cases, facial recognition, which may be considered as being part of a multi-factor authorization, may not be performed. The BLE camera 84 may determine either the person identified through facial recognition matches the person that is associated with the received access code. After performing these processes, the BLE camera 84 will determine if access should be granted, as indicated at block 92. If so, a signal is sent to open the door relay, as indicated at block 94. If not, an alert may be triggered and/or security may be notified, as indicated at block 96. It is contemplated that the BLE camera 84 may send a door unlock signal to the relay via a wired or wireless connection 98, for example.

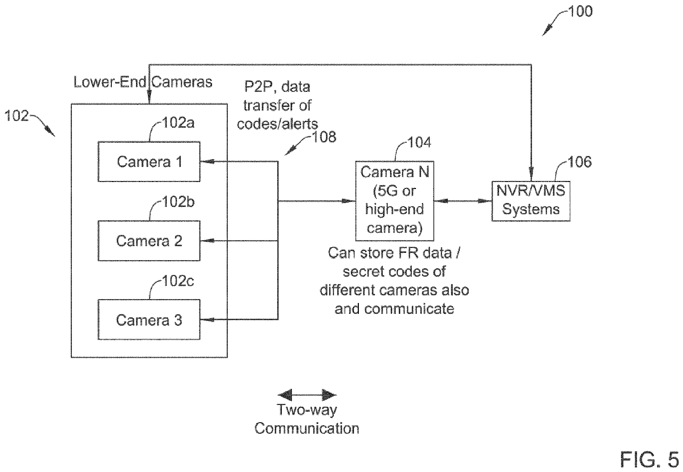

Figure 5 is a schematic block diagram showing communication within an illustrative access control system 100. The illustrative access control system 100 may include a number of lower-end cameras 102, individually labeled as 102a, 102b and 102c. The access control system 100 may include any number of lower-end cameras 102. The access control system 100 may include one or more higher-end (such as 5G-capable) cameras 104. The one or more higher-end cameras 104 may be configured to communicate with NVR/VMS (network video recorder and/or video management system) systems 106. The one or more higher-end cameras 104 may also be configured to communicate with the lower-end cameras 102 via a Peer-to-Peer network 108 that facilitates two-way communication between the lower-end cameras 102 and the higher-end cameras 104. The higher-end cameras 104 have additional processing resources (processor and/or memory) and in some cases higher communication bandwidth (e.g. 5G) than the lower end cameras. As a result, the increased capabilities of the higher-end cameras 104 may be used to perform video processing on video streams captured and provided by the lower-end cameras 102, and to store/updated access codes, for example. The additional capabilities of the higher-end cameras 104 can be useful to provide an edge-based solution.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. An access control system configured to control access to a secure space via an access gate, the access control system comprising:
a lock that releasably locks the access gate, the lock configured to be releasably unlocked upon receiving an unlock signal;
an access control device that is deployable proximate the access gate, the access control device including a housing that houses:
a camera configured to capture one or more images of persons in front of the access gate;
a wireless transceiver;
a controller that is operably coupled with the camera and the wireless transceiver, the controller configured to:
receive via the wireless transceiver an access code from a mobile device carried by a person in front of the access gate;
confirm whether the person with that access code is authorized to enter through the access gate;
when confirmed, provide the unlock signal to the lock to unlock the access gate; and
when not confirmed, not providing the unlock signal to the lock.

2. The access control system of claim 1, wherein the controller is configured to:
receive one or more images of persons in front of the access gate while the access gate is unlocked; and
determine from the one or more images whether a person other than the person with the access code is attempting to gain entry through the access gate by tailgating.

3. The access control system of claim 2, wherein the controller, in determining whether a person other than the person with the access code is attempting to gain entry through the access gate by tailgating, sends the one or more images to a remote device and receives from the remote device whether a person other than the person with the access code is attempting to gain entry through the access gate by tailgating.

4. The access control system of claim 2, wherein the controller implements video analytics for determining whether a person other than the person with the access code is attempting to gain entry through the access gate by tailgating.

5. The access control system of claim 1, wherein the controller is configured to:
receive one or more images of persons in front of the access gate;
determine, based at least in part on the one or more images, one or more of:
whether the person with the access code is in compliance with a masking mandate, and if not, not providing the unlock signal to the lock;
whether the person with the access code is in compliance with a social distancing mandate, and if not, not providing the unlock signal to the lock;
whether the person with the access code is in compliance with an equipment mandate, and if not, not providing the unlock signal to the lock;
whether one or more persons in front of the access gate are exhibiting predetermined behavior; and
an occupancy count of people in the space.

6. The access control system of claim 5, wherein the equipment mandate includes a mandate to wear one or more of a clean room suit, a hard hat, a pair of safety glasses, gloves, ear plugs, a hair net and boots.

7. The access control system of claim 1, wherein the controller is configured to:
receive one or more images of persons in front of the access gate;
determine, based at least in part on the one or more images, one or more facial features suitable for facial recognition for one or more persons in front of the access gate; and
confirm through facial recognition the identity of the person with the access code, and if confirmed, provide the unlock signal to the lock to unlock the access gate, and if not confirmed, not providing the unlock signal to the lock.

8. The access control system of claim 1, wherein the controller is configured to:
receive one or more images of persons in front of the access gate; and
archive one or more of the images that are captured while the access gate is unlocked.

9. The access control system of claim 1, wherein the access control device is operatively coupled to one or more remote access control devices via a peer-to-peer network, and communicates information with one or more of the remote access control devices via the peer-to-peer network, each of the one or more remote access control devices include a housing that houses:
a camera configured to capture one or more images of persons in front of a corresponding access gate of the access control system;
a wireless transceiver;
a controller that is operably coupled with the camera and the wireless transceiver, the controller configured to:
receive via the wireless transceiver an access code from a mobile device carried by a person in front of the corresponding access gate;
confirm whether the person with that access code is authorized to enter through the corresponding access gate;
when confirmed, provide the unlock signal to the lock to unlock the corresponding access gate; and
when not confirmed, not providing the unlock signal to the lock.

10. The access control system of claim 1, wherein the controller provides the unlock signal to the lock via a wired connection, wherein the access control device comprises two or more wiring terminals accessible from outside of the housing for receiving control wires from the lock.

11. The access control system of claim 10, wherein the access control device comprises two or more wiring terminals accessible from outside of the housing for receiving power wires for powering the access control device.

12. The access control system of claim 11, wherein the access control device comprises a wired network port for receiving a network cable for communicating with one or more remote devices across the network cable.

13. A method for controlling access to a secure space via an access control system, wherein the access control system includes a lock that releasably locks an access gate to the secure space, wherein the lock is configured to be releasably unlocked upon receiving an unlock signal, an access control device that is deployable proximate the access gate, wherein the access control device including a housing that houses a camera configured to capture one or more images of persons in front of the access gate, a wireless transceiver, and a controller that is operably coupled with the camera and the wireless transceiver, the method comprising:
receiving via the wireless transceiver an access code from a mobile device carried by a person in front of the access gate;
the controller confirming whether the person with that access code is authorized to enter through the access gate;
when confirmed, the controller providing the unlock signal to the lock to unlock the access gate; and
when not confirmed, the controller not providing the unlock signal to the lock.

14. The method of claim 13, further comprising:
the controller receiving one or more images of persons in front of the access gate while the access gate is unlocked; and
the controller determining from the one or more images whether a person other than the person with the access code is attempting to gain entry through the access gate by tailgating.

15. The method of claim 14, wherein:
the controller, in determining whether a person other than the person with the access code is attempting to gain entry through the access gate by tailgating, performing one or more of:
sending the one or more images to a remote device and receives from the remote device whether a person other than the person with the access code is attempting to gain entry through the access gate by tailgating; or
executing video analytics for determining whether a person other than the person with the access code is attempting to gain entry through the access gate by tailgating.
